(19)

Europäisches
Patentamt
European
Patent Office
Office européen
des brevets

(11) **EP 4 692 617 A1**

(12) **EUROPEAN PATENT APPLICATION**
published in accordance with Art. 153(4) EPC

(43) Date of publication:
**11.02.2026 Bulletin 2026/07**

(21) Application number: **24806577.3**

(22) Date of filing: **14.05.2024**

(51) International Patent Classification (IPC):
***F16K 31/06*** (2006.01)

(52) Cooperative Patent Classification (CPC):
Y02B 30/70

(86) International application number:
**PCT/CN2024/093125**

(87) International publication number:
**WO 2024/235227 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.05.2023 CN 202321199298 U**

(71) Applicant: **Zhejiang Dunan Artificial Environment
Co., Ltd.
Shaoxing
Zhejiang 311835 (CN)**

(72) Inventors:
• **JIN, Ju**
 **Shaoxing, Zhejiang 311835 (CN)**
• **DONG, Shenghai**
 **Shaoxing, Zhejiang 311835 (CN)**
• **WANG, Fugang**
 **Shaoxing, Zhejiang 311835 (CN)**

(74) Representative: **Zacco GmbH
Bayerstrasse 83
80335 München (DE)**

(54) **ELECTRONIC EXPANSION VALVE**

(57)    Disclosed is an electronic expansion valve. The electronic expansion valve includes a frame body (10), where the frame body (10) has a mounting cavity (30) and an accommodating cavity (20), and the mounting cavity (30) is located on a circumferential outer side of the accommodating cavity (20); a magnetic rotor (40), where the magnetic rotor (40) is movably arranged in the accommodating cavity (20) in a height direction of the accommodating cavity (20); a control circuit board (31), where the control circuit board (31) is arranged in the mounting cavity (30); and a magnetoresistive sensor assembly (50), where the magnetoresistive sensor assembly (50) is fixed on the control circuit board (31), and a moving range of the magnetic rotor (40) falls within a sensing range of the magnetoresistive sensor assembly (50).

Fig. 1

EP 4 692 617 A1

# Description

## Cross-Reference to Related Application

The present disclosure claims the benefit of priority to Chinese Patent Application No. 202321199298.4, filed with the China National Intellectual Property Administration on May 15, 2023 and entitled "Electronic expansion valve", which is incorporated in its entirety herein by reference.

## Technical Field

The present disclosure relates to the technical field of flow control devices, and particularly relates to an electronic expansion valve.

## Background

A Hall sensor is generally used as a sensor of an existing electronic expansion valve. When the Hall sensor is assembled to a circuit board, the Hall sensor is required to be first mounted in a Hall bracket, then a combined member of the Hall sensor and the Hall bracket is assembled to the circuit board, and a pin of the Hall sensor is welded to the circuit board. Two assembling procedures and one welding procedure are combined. Thus, when the electronic expansion valve is assembled, a process is complex, efficiency is low, and mounting cost is high.

## Summary

A main objective of the present disclosure is to provide an electronic expansion valve, to resolve problems of complex process, low efficiency, and high mounting cost when a Hall sensor of an electronic expansion valve is assembled in the prior art.

To achieve the above objective, according to an aspect of the present disclosure, an electronic expansion valve is provided. The electronic expansion valve includes a frame body, where the frame body has a mounting cavity and an accommodating cavity, and the mounting cavity is located on a circumferential outer side of the accommodating cavity; a magnetic rotor, where the magnetic rotor is movably arranged in the accommodating cavity in a height direction of the accommodating cavity; a control circuit board, where the control circuit board is arranged in the mounting cavity; and a magnetoresistive sensor assembly, where the magnetoresistive sensor assembly is fixed on the control circuit board and attached to the control circuit board, and a moving range of the magnetic rotor falls within a sensing range of the magnetoresistive sensor assembly.

Optionally, the magnetoresistive sensor assembly at least includes two magnetoresistive sensors. The magnetoresistive sensors are patch-type sensors. The patch-type sensors are fixed on the control circuit board in a patching manner.

Optionally, an interval is provided between a bottom surface of the magnetoresistive sensor assembly and a bottom wall of the mounting cavity.

Optionally, an interval distance between the bottom surface of the magnetoresistive sensor assembly and the bottom wall of the mounting cavity is 0.1 mm to 1.0 mm.

Optionally, an interval is provided between a side wall of the magnetoresistive sensor assembly and a side wall of the mounting cavity.

Optionally, an interval distance between a side wall of the magnetoresistive sensor assembly and a side wall of the mounting cavity is 0.1 mm to 1.0 mm.

Optionally, a wall surface of the mounting cavity includes a first side wall along the circumferential and a second side wall along the circumferential. The second side wall is located on the inner side of the first side wall. The control circuit board is arranged outside the second side wall in a sleeving manner. A tangent plane is provided on the second side wall. An opening adapted to the tangent plane is provided on the control circuit board. The magnetoresistive sensor assembly on the control circuit board is aligned with the tangent plane.

Optionally, the magnetoresistive sensor assembly includes a first magnetoresistive sensor and a second magnetoresistive sensor. The first magnetoresistive sensor and the second magnetoresistive sensor are arranged on the control circuit board at an interval.

Optionally, a distance between a center of the first magnetoresistive sensor and a center of the magnetic rotor is equal to a distance between a center of the second magnetoresistive sensor and the center of the magnetic rotor.

Optionally, in the height direction of the accommodating cavity, an included angle $\alpha$ is formed by a projection of a center of the first magnetoresistive sensor, a projection of a center of the second magnetoresistive sensor, and a projection of a center of the magnetic rotor, with the vertex at the center of the magnetic rotor. A number n of magnetic pole pairs of the magnetic rotor and the included angle $\alpha$ satisfy:

$$\alpha = m\frac{360°}{2n} + \beta$$

where m is a positive integer, and $\beta$ is a positive number less than $\frac{360°}{2n}$.

Optionally, the magnetic rotor includes a detecting rotor and a driving rotor. The detecting rotor and the driving rotor are of an integral structure.

Optionally, a connector is fixed between the driving rotor and the detecting rotor. The driving rotor, the detecting rotor, and the connector are in an H shape jointly.

Optionally, the magnetoresistive sensor assembly includes one magnetoresistive sensor. The magnetoresistive sensor is a patch-type sensor. The patch-type sensor is fixed on the control circuit board in a patching manner.

By applying the technical solution of the present disclosure, an electronic expansion valve includes a frame body, a magnetic rotor, a control circuit board, and a magnetoresistive sensor assembly. The frame body has an accommodating cavity and a mounting cavity. The mounting cavity is located on a circumferential outer side of the accommodating cavity. The magnetic rotor is movably arranged in the accommodating cavity in a height direction of the accommodating cavity. The control circuit board is arranged in the mounting cavity. The magnetoresistive sensor assembly is fixed on the control circuit board. A moving range of the magnetic rotor falls within a sensing range of the magnetoresistive sensor assembly.

By providing the accommodating cavity, the magnetic rotor moves in the height direction of the accommodating cavity. Moreover, the magnetic rotor rotates in the accommodating cavity. Through an arrangement of the accommodating cavity, interference of other structural members in a movement of the magnetic rotor is reduced. Thus, the magnetic rotor stably works. By arranging the magnetoresistive sensor assembly, the magnetoresistive sensor assembly collects a magnetic field of the magnetic rotor in a moving process, and forms a moving magnetic field curve. By analyzing a relation among a plurality of moving magnetic field curves, a movement situation of the magnetic rotor is determined. Moreover, the magnetoresistive sensor is fixed on the control circuit board in a patching manner, and no additional fixing member is required. Thus, assembly of the electronic expansion valve is simpler, and mounting cost is reduced. Problems of complex process, low efficiency, and high mounting cost when an electronic expansion valve is assembled in the prior art are resolved.

**Brief Description of the Drawings**

Accompanying drawings of the description serve as a constituent part of the present disclosure to provide a further understanding of the present disclosure. Illustrative examples of the present disclosure and their descriptions serve to explain the present disclosure, and are not to be construed as unduly limiting the present disclosure. In the accompanying drawings,

Fig. 1 shows a schematic structural diagram of an electronic expansion valve according to an optional example of the present disclosure;

Fig. 2 shows a view of the electronic expansion valve in Fig. 1 from an angle;

Fig. 3 shows a schematic diagram of a corresponding relation, on time, among an operating step number of a stepping electric motor, a magnetic pole of a rotor, and a signal of a sensor of the electronic expansion valve in Fig. 1 rotates forward;

Fig. 4 shows a schematic diagram of a corresponding relation, on time, among an operating step number of a stepping electric motor, a magnetic pole of a rotor, and a signal of a sensor of the electronic expansion valve in Fig. 1 rotates backward;

Fig. 5 shows a schematic diagram of a principle when the electronic expansion valve in Fig. 1 is jammed and stuck; and

Fig. 6 shows a schematic diagram of a principle when the electronic expansion valve in Fig. 1 is jammed and rebounded.

The above figures include reference numerals as follows:
10. frame body; 20. accommodating cavity; 30. mounting cavity; 31. control circuit board; 32. protrusion; 33. notch; 34. first side wall; 35. second side wall; 36. tangent plane; 37. opening; 38. mounting table; 40. magnetic rotor; 41. detecting rotor; 42. driving rotor; 43. connector; 50. magnetoresistive sensor assembly; 51. first magnetoresistive sensor; and 52. second magnetoresistive sensor.

**Detailed Description of the Embodiments**

To enable a person skilled in the art to better understand the solution of the present disclosure, the technical solutions in examples of the present disclosure will be clearly and comprehensively described below in combination with accompanying drawings in the examples of the present disclosure. Apparently, the examples described are merely some examples rather than all examples of the present disclosure. On the basis of examples of the present disclosure, all other examples obtained by a person of ordinary skill in the art without making creative efforts shall all fall within the scope of protection of the present disclosure.

It should be noted that terms "first", "second", etc., in the description and claims of the present disclosure and in the above accompanying drawings, are set to distinguish between similar objects and not certainly to describe a particular sequence or a sequential order. It should be understood that data used in this way can be interchanged under appropriate circumstances such that the examples of the present disclosure described herein can be implemented in a sequence other than those illustrated or described herein. In addition, the terms "include" and "have" and their variations are intended to cover non-exclusive inclusion. For instance, a process, method, system, product, or device, which includes a series of steps or units, is not required to be limited by those explicitly listed, but can include other steps or units not explicitly listed or inherent to the process, method, product, or device.

In the description of the present disclosure, it should be understood that orientation or position relations indicated by terms "center", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial", "circumferential", etc. are based on orientation or position relations shown in accompanying drawings and are merely for ease of description of the present disclosure and simplification of the description, rather than indicating or implying that the apparatuses or elements referred to must have a particular orientation or be constructed and operated in a particular orientation, and thus cannot be construed as limiting the present disclosure.

To resolve problems of complex process, low efficiency, and high mounting cost when an electronic expansion valve is assembled in the prior art, the present disclosure provides an electronic expansion valve.

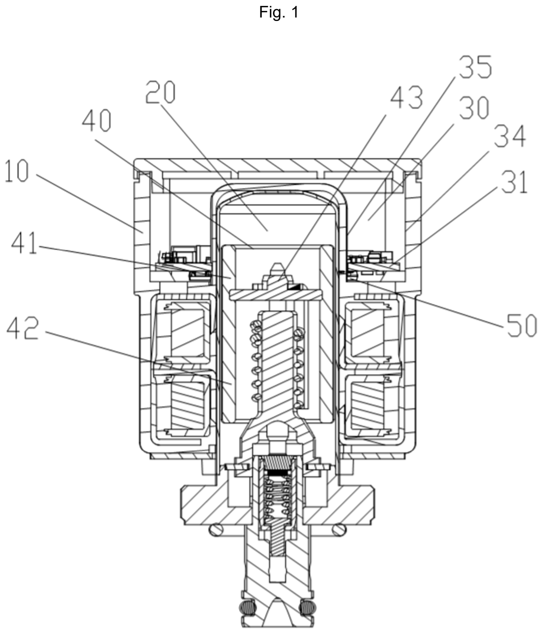

As shown in Fig. 1 to Fig. 6, an electronic expansion valve includes a frame body 10, where the frame body 10 has a mounting cavity 30 and an accommodating cavity 20, and the mounting cavity 30 is located on a circumferential outer side of the accommodating cavity 20; a magnetic rotor 40, where the magnetic rotor 40 is movably arranged in the accommodating cavity 20 in a height direction of the accommodating cavity 20; a control circuit board 31, where the control circuit board 31 is arranged in the mounting cavity 30; and a magnetoresistive sensor assembly 50, where the magnetoresistive sensor assembly 50 is fixed on the control circuit board 31 and attached to the control circuit board 31, and a moving range of the magnetic rotor 40 falls within a sensing range of the magnetoresistive sensor assembly 50. The moving range of the magnetic rotor 40 falls within the sensing range of the magnetoresistive sensor assembly 50, which specifically means that a position of the magnetoresistive sensor assembly 50 falls within a height range of the magnetic rotor 40 moving in an axial direction of the valve.

Specifically, the control circuit board 31 cooperates with the magnetoresistive sensor of the magnetoresistive sensor assembly 50, to detect a jammed situation of the magnetic rotor 40.

It should be noted that the magnetic rotor 40 further rotates in the accommodating cavity 20.

Optionally, in some examples of the present disclosure, the accommodating cavity 20 is cylindrical.

By providing the accommodating cavity 20, the magnetic rotor 40 moves in the height direction of the accommodating cavity 20. Moreover, the magnetic rotor 40 rotates in the accommodating cavity 20. Through an arrangement of the accommodating cavity 20, interference of other structural members in a movement of the magnetic rotor 40 is reduced. Thus, the magnetic rotor 40 stably works. By arranging the magnetoresistive sensor assembly 50, the magnetoresistive sensor assembly 50 collects a magnetic field of the magnetic rotor 40 in a moving process, and forms a moving magnetic field curve. By analyzing a relation among a plurality of moving magnetic field curves, a movement situation of the magnetic rotor 40 is determined. Moreover, the magnetoresistive sensor is fixed on the control circuit board 31 in a patching manner, and no additional fixing member is required. Thus, assembly of the electronic expansion valve is simpler, and mounting cost is reduced. A problem that in the prior art, it is complex to assemble an electronic expansion valve, and mounting cost is high is resolved.

It should be noted that when the circuit board with the magnetoresistive sensor is mounted, the magnetoresistive sensor and other devices except the magnetoresistive sensor are first attached to the circuit board. Then, one-time welding is performed by using a tunnel furnace. That is, the magnetoresistive sensor is fixed on the circuit board, and the circuit board is assembled. A method for processing an existing circuit board with a Hall sensor is as follows: patching is performed on other devices except the Hall sensor on the circuit board first. Welding is performed by using a tunnel furnace after the patching. Then, the Hall sensor is mounted in a Hall bracket, and a combined member of the Hall sensor and the Hall bracket is inserted into the circuit board. Finally, a pin of the Hall sensor is welded to the circuit board. Apparently, when the magnetoresistive sensor is used, the circuit board is simpler and more convenient to assembly.

It should be noted that in the present disclosure, a Hall sensor in the prior art is replaced by a magnetoresistive sensor, and the magnetoresistive sensor and the Hall sensor have different characteristics. Specifically, the magnetoresistive sensor and the Hall sensor have different principles for sensing magnetic fields. The principle of the magnetoresistive sensor is a magnetic effect (an external magnetic field changes a resistance value). The principle of the Hall sensor is a Hall effect (an external magnetic field generates a voltage difference). The magnetoresistive sensor and the Hall sensor have different induction directions of inducing magnetic fields. The Hall sensor is configured to induce a vertical magnetic field. The magnetic rotor 40 and the Hall sensor are arranged up and down in an axial direction of the valve. The magnetoresistive sensor is configured to induce a horizontal magnetic field. The magnetic rotor 40 and the magnetoresistive sensor valve are arranged left and right in a radial direction. The magnetoresistive sensor is located within a height range of the magnetic rotor 40. The magnetoresistive sensor and the Hall sensor have different power consumption. The power consumption of the magnetoresistive sensor is at a microampere level. The power consumption of the Hall sensor is at a milliampere level. The power consumption of the magnetoresistive sensor is lower.

Optionally, the magnetoresistive sensor assembly 50 includes one magnetoresistive sensor. The magnetoresistive sensor is a patch-type sensor.

Optionally, the magnetoresistive sensor assembly 50 at least includes two magnetoresistive sensors. The magnetoresistive sensors are patch-type sensors.

Specifically, the two patch-type magnetoresistive sensors are fixed on the control circuit board 31 in a patching manner.

Optionally, protrusions 32 are arranged at a bottom of the mounting cavity 30. Notches 33 adapted to the protrusions 32 are provided on the control circuit board 31. The number of the notches 33 corresponds to the number of the protrusions 32.

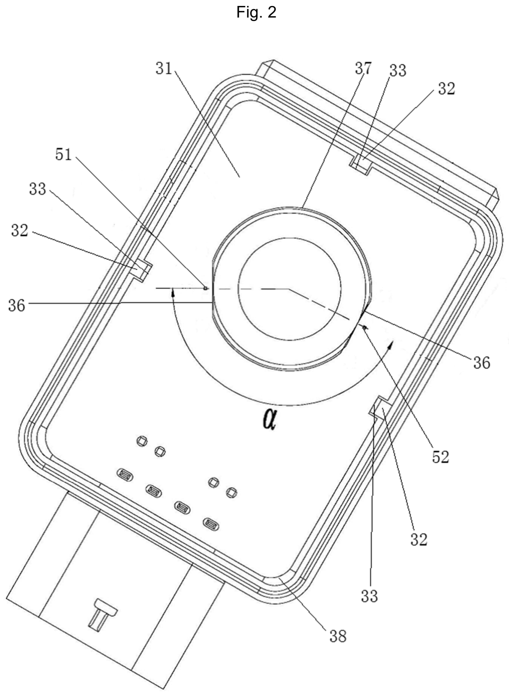

Specifically, with reference to Fig. 2, protrusions 32 are arranged at a bottom of the mounting cavity 30. Notches 33 adapted to the protrusions 32 are provided on the control circuit board 31. The number of the notches 33 is equal to the number of the protrusions 32. In the example, the notches 33 provided on the control circuit board 31 correspond to the protrusions 32 arranged at the bottom of the mounting cavity 30. The protrusions 32 are seen from the notches 33. Through corresponding arrangements of the notches 33 and the protrusions 32, the control circuit board 31 is prevented from being mounted in a wrong direction.

Optionally, intervals are provided between top surfaces of the protrusions 32 and a bottom surface of the control circuit board 31.

Optionally, the top surfaces of the protrusions 32 are attached to the bottom surface of the control circuit board 31.

Optionally, the protrusions 32 are inserted into the notches 33 of the control circuit board 31 in a one-to-one correspondence manner.

It can be understood that the protrusions 32 are inserted into the notches 33 of the control circuit board 31 in a one-to-one correspondence manner, to limit the control circuit board 31. Further, the control circuit board 31 is prevented from shaking in the mounting cavity 30 after being mounted, and stability of the control circuit board 31 is increased.

Optionally, four mounting tables 38 are arranged at the bottom of the mounting cavity 30. The four mounting tables 38 are distributed at four corners of the bottom of the mounting cavity 30. The control circuit board 31 is placed on the mounting tables 38.

Optionally, the control circuit board 31 is square. Three protrusions 32 are arranged. The three notches 33 of the control circuit board 31 corresponding to the protrusions 32 are located at three outer edges of the control circuit board 31 respectively.

Illustratively, with reference to Fig. 2, three square protrusions 32 are provided at the bottom of the mounting cavity 30. Three square notches 33 are provided on the three outer edges of the control circuit board 31 to match the protrusions 32.

**It** can be understood that the three protrusions 32 in different orientations cooperate with the three notches 33, to effectively prevent the control circuit board 31 from being mounted in a wrong mounting direction.

**It** should be noted that in some examples of the present disclosure, four, five or even more protrusions 32 are arranged on an inner wall of the mounting cavity 30. Correspondingly, the number of the notches 33 provided on the control circuit board 31 is at least equal to the number of the protrusions 32. Moreover, the shape of the protrusion 32 matches the shape of the notch 33.

Optionally, an interval is provided between the bottom surface of the magnetoresistive sensor assembly 50 and the bottom wall of the mounting cavity 30. Thus, the magnetoresistive sensor assembly 50 is prevented from being impacted and damaged when the magnetoresistive sensor assembly 50 is mounted.

Specifically, with reference to Fig. 1, the magnetoresistive sensor assembly 50 is arranged on a surface of the control circuit board 31 close to a bottom wall of the mounting cavity 30. An interval is arranged between the bottom surface of the magnetoresistive sensor assembly 50 and the bottom wall of the mounting cavity 30. Thus, the magnetoresistive sensor assembly 50 is prevented from colliding with the bottom wall of the mounting cavity 30 and being damaged when the control circuit board 31 is mounted.

Optionally, an interval distance between the bottom surface of the magnetoresistive sensor assembly 50 and the bottom wall of the mounting cavity 30 is 0.1 mm to 1.0 mm.

Optionally, the magnetoresistive sensor assembly 50 alternatively is arranged on a surface of the control circuit board 31 close to a top wall of the mounting cavity 30.

Optionally, an interval is provided between the side wall of the magnetoresistive sensor assembly 50 and the side wall of the mounting cavity 30. Thus, the magnetoresistive sensor assembly 50 is prevented from being impacted and damaged when the magnetoresistive sensor assembly 50 is mounted.

Specifically, with reference to Fig. 1, the magnetoresistive sensor assembly 50 is arranged on a side of the control circuit board 31 close to the accommodating cavity 20. An interval is provided between the magnetoresistive sensor assembly 50 and the side wall of the mounting cavity 30. A size of the interval is determined according to an actual performance of the magnetoresistive sensor.

Optionally, an interval distance between a side wall of the magnetoresistive sensor assembly 50 and a side wall of the mounting cavity 30 is 0.1 mm to 1.0 mm.

Optionally, a wall surface of the mounting cavity 30 includes a first side wall 34 along the circumferential and a second side wall 35 along the circumferential. The second side wall 35 is located on the inner side of the first side wall 34. The control circuit board 31 is arranged outside the second side wall 35 in a sleeving manner. A tangent plane 36 is provided on the second side wall 35. An opening 37 adapted to the tangent plane 36 is provided on the control circuit board 31. The magnetoresistive sensor assembly 50 on the control circuit board 31 is aligned with the tangent plane 36.

**It** can be understood that the tangent plane 36 is provided on the second side wall 35, and the magnetoresistive sensor assembly 50 is aligned with the tangent plane 36. Thus, the magnetoresistive sensor assembly 50 is closer to the magnetic rotor 40 in the accommodating cavity 20. A sensing result of the magnetoresistive sensor assembly 50 is more accurate.

Optionally, the magnetoresistive sensor assembly 50 includes a first magnetoresistive sensor 51 and a second magnetoresistive sensor 52. The first magnetoresistive sensor 51 and the second magnetoresistive sensor 52 are arranged on the control circuit board 31 at an interval.

Specifically, with reference to Fig. 2, the magnetoresistive sensor assembly 50 includes a first magnetoresistive sensor 51 and a second magnetoresistive sensor 52. An interval is provided between a mounting position of the first magnetoresistive sensor 51 and a mounting position of the second magnetoresistive sensor 52 on the control circuit board 31. That is, the two magnetoresistive sensors are mounted in different orientations of the control circuit board 31.

**It** should be noted that the first magnetoresistive sensor 51 and the second magnetoresistive sensor 52 are fixed on the control circuit board 31 in a patching manner.

Optionally, a distance between a center of the first magnetoresistive sensor 51 and a center of the magnetic rotor 40 is equal to a distance between a center of the second magnetoresistive sensor 52 and the center of the magnetic rotor 40.

**It** can be understood that the distance between the center of the first magnetoresistive sensor 51 and the center of the magnetic rotor 40 is equal to the distance between the center of the second magnetoresistive sensor 52 and the center of the magnetic rotor, which ensures that magnetic field intensity induced by the two magnetoresistive sensors is equal to each other. Further, a determined movement situation of the magnetic rotor 40 is more accurate.

Optionally, with reference to Fig. 2, in the height direction of the accommodating cavity 20, an included angle $\alpha$ is formed by a projection of a center of the first magnetoresistive sensor 51, a projection of a center of the second magnetoresistive sensor 52, and a projection of a center of the magnetic rotor 40, with the vertex at the center of the magnetic rotor 40. A number n of magnetic pole pairs of the magnetic rotor 40 and the included angle $\alpha$ satisfy:  $\alpha = m\frac{360°}{2n} + \beta$ , where m is a positive integer, and $\beta$ is a positive number less than $\frac{360°}{2n}$.

Optionally, the magnetic rotor 40 includes a detecting rotor 41 and a driving rotor 42. The detecting rotor 41 and the driving rotor 42 are of an integral structure.

Specifically, as shown in Fig. 1, the magnetic rotor 40 includes a driving rotor 42 and a detecting rotor 41. The detecting rotor 41 and the driving rotor 42 are of an integral structure. The driving rotor 42 is arranged in the accommodating cavity 20. The detecting rotor 41 is arranged on a side of the driving rotor 42 close to the mounting cavity 30. The driving rotor 42 drives the detecting rotor 41 to rotate. The number of magnetic poles of the driving rotor 42 is equal to the number of magnetic poles of the detecting rotor 41. The driving rotor 42 drives the detecting rotor 41 to rotate, and the number of magnetic poles of the driving rotor 42 is equal to the number of magnetic poles of the detecting rotor 41, which prevents an influence of a magnetic pole of the driving rotor 42 on a magnetic field generated by the detecting rotor 41, to ensure that the magnetoresistive sensor assembly 50 stably operates.

**It** should be noted that due to the integral structure of the driving rotor 42 and the detecting rotor 41, the electronic expansion valve is more conveniently assembled. Moreover, due to the integral structure, it is ensured that the driving rotor 42 and the detecting rotor 41 are made of the same material, and a magnetic field of the driving rotor 42 and a magnetic field of the detecting rotor 41 are prevented from influencing each other.

Optionally, a connector 43 is fixed between the driving rotor 42 and the detecting rotor 41. The driving rotor 42, the detecting rotor 41, and the connector 43 are in an H shape jointly.

Specifically, as shown in Fig. 1, the driving rotor 42, the detecting rotor 41, and the connector 43 are in an H shape entirely. The connector 43 plays a role of power transmission. The driving rotor 42 drives the connector 43 to move. The connector 43 drives a valve needle of the electronic expansion valve connected to the connector 43 to rotate.

**It** should be noted that in a case that the accommodating cavity 20 is cylindrical, the detecting rotor 41 is cylindrical.

**It** should be noted that the driving rotor 42 drives the detecting rotor 41 to rotate. The driving rotor 42 and the detecting rotor 41 are integral. When the driving rotor 42 rotates, the detecting rotor 41 integrally formed with the driving rotor 42 rotates synchronously. In other words, when the driving rotor 42 rotates, the detecting rotor 41 rotates. When the driving rotor 42 is in an ascending phase, the detecting rotor 41 is in an ascending phase. When the driving rotor 42 is in a descending phase, the detecting rotor 41 is in a descending phase. That is, a movement of the detecting rotor 41 indicates a movement of the driving rotor 42. By analyzing a relation among a plurality of moving magnetic field curves, a movement situation of the driving rotor 42 is determined. Further, whether the driving rotor 42 is in an ascending phase or a descending phase is determined. Moreover, whether the driving rotor 42 rotates is determined.

It should be noted that since a rotation direction of the driving rotor 42 in the ascending phase is different from that in the descending phase, phase differences of two moving magnetic field curves are opposite each other. When the electronic expansion valve is designed, which curve at the front is the ascending phase or the descending phase is required to be specified. Or whether positive or negative phase differences of the two movement curves correspond to the ascending phase or the descending phase, etc. are required to be given, to determine whether the driving rotor 42 is in the ascending phase or the descending phase.

It can be understood that since the detecting rotor 41 rotates at a constant speed, the moving magnetic field curve of the detecting rotor 41 collected by the magnetoresistive sensor assembly 50 is regular. When the driving rotor 42 no longer rotates or no longer rotates at a constant speed, a period of the moving magnetic field curve of the detecting rotor 41 changes. Moreover, whether the electronic expansion valve is jammed is determined by observing the period of the moving magnetic field curve. When the electronic expansion valve is designed, the period of the moving magnetic field curve when the detecting rotor 41 normally moves is collected in advance. When the electronic expansion valve operates, if the period of the moving magnetic field curve is shorter than the period of the moving magnetic field curve when the detecting rotor 41 normally moves, the driving rotor 42 no longer rotates or no longer rotates at a constant speed.

Specifically, when the electronic expansion valve determines a movement situation of the detecting rotor 41 by the first magnetoresistive sensor 51 and the second magnetoresistive sensor 52, a principle is as follows:
When the detecting rotor 41 is rotated, an N pole and an S pole of the detecting rotor 41 alternately pass through the first magnetoresistive sensor 51 and the second magnetoresistive sensor 52. The first magnetoresistive sensor 51 induces a magnetic field change of the detecting rotor 41 and generates a periodic first feedback signal. The first feedback signal is a square wave. The first feedback signal includes a plurality of first hopping signals. The second magnetoresistive sensor 52 induces a magnetic field change of the detecting rotor 41 and generates a periodic second feedback signal. The second feedback signal is a square wave. The second feedback signal includes a plurality of second hopping signals. That is, the signal is changed from the N pole to the S pole or move from the S pole to the N pole. The first magnetoresistive sensor 51 generates a first hopping signal. The second magnetoresistive sensor 52 generates a second hopping signal. The first hopping signal and the second hopping signal hop from a low level to a high level or hop from a low level to a high level.

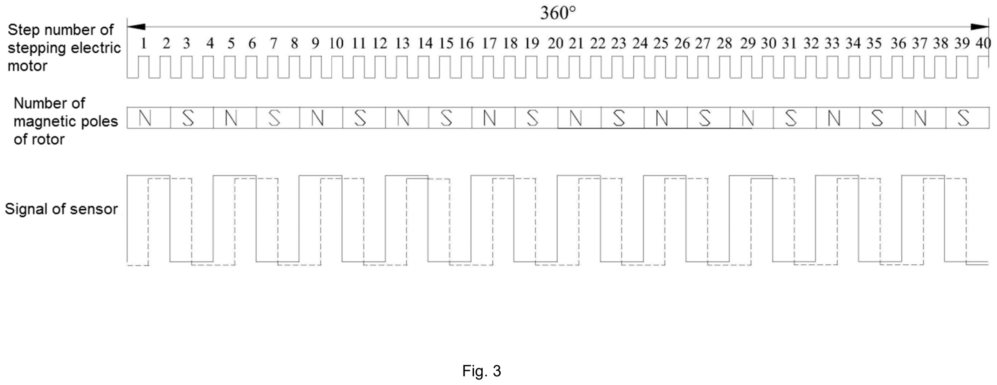

It should be noted that in Fig. 3, Fig. 4, Fig. 5, and Fig. 6, sensor signals are collected by the first magnetoresistive sensor 51 and the second magnetoresistive sensor 52. In a phase diagram corresponding to the sensor signals, a solid line corresponds to a curve corresponding to the first feedback signal sensed by the first magnetoresistive sensor 51. A dotted line is a curve corresponding to the second feedback signal sensed by the second magnetoresistive sensor 52.

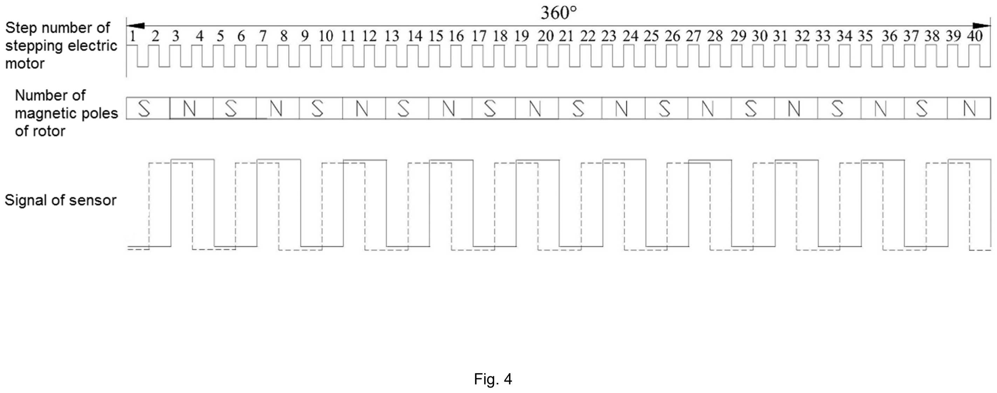

With reference to Fig. 3, when the detecting rotor 41 of the electronic expansion valve rotates forward, the first hopping signal corresponding to the first magnetoresistive sensor 51 is always ahead of the second hopping signal corresponding to the second magnetoresistive sensor 52. With reference to Fig. 4, when the detecting rotor 41 of the electronic expansion valve rotates backward, the second hopping signal corresponding to the second magnetoresistive sensor 52 is always ahead of the first hopping signal corresponding to the first magnetoresistive sensor 51.

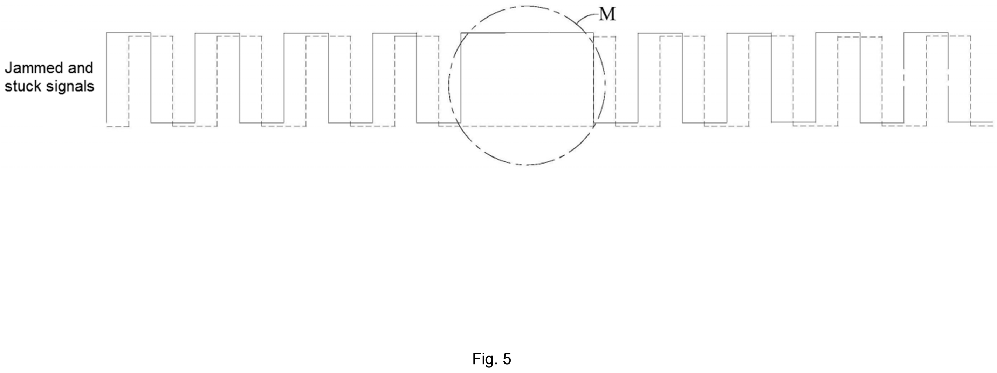

With reference to Fig. 5, as indicated by M in the figure, when the stepping electric motor is jammed, the detecting rotor 41 does not rotate. Thus, no hopping signal is received. A count is kept unchanged in a set time period.

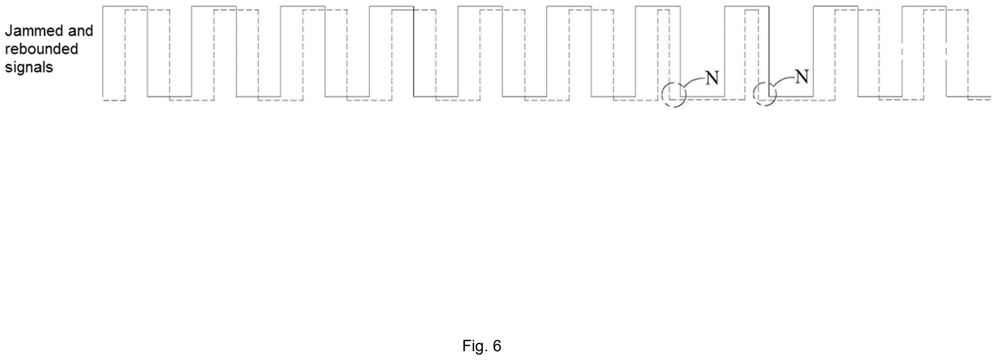

With reference to Fig. 6, as indicated by N in the figure, when the stepping electric motor is jammed and rebounded, the first hopping signal is ahead of the second hopping signal originally, but the second hopping signal will be ahead of the first hopping signal due to a rebound. A count that originally keeps being gradually increased is decreased. Thus, in the set time period, and when the count is not increased but is decreased, it is determined that the stepping electric motor is jammed and rebounded. Similarly, the second hopping signal is ahead of the first hopping signal originally, but the first hopping signal will be ahead of the second hopping signal due to a rebound. A count that originally keeps being gradually decreased is increased. Thus, in a set time period, and when the count is not decreased but is increased, it is determined that the stepping electric motor is jammed and rebounded.

It should be noted that the count indicates that if a difference is positive, a count is increased or decreased by a set value. If the corresponding difference is negative, the count will be decreased or increased by the set value. The difference indicates a difference between time when the second hopping signal is collected and time when the first hopping signal is collected. When the stepping electric motor normally operates, for example, during forward rotation, with reference to Fig. 3, the first hopping signal is always ahead of the second hopping signal, such that the count always keeps being gradually increased. For example, during backward rotation, with reference to Fig. 4, the second hopping signal is always ahead of the first hopping signal, such that the count always keeps being gradually decreased.

Apparently, the examples described above are merely some examples rather than all examples of the present disclosure. On the basis of examples of the present disclosure, all other examples obtained by a person of ordinary skill in the art without making creative efforts shall all fall within the scope of protection of the present disclosure.

It should be noted that terms used herein are merely for describing particular embodiments and are not intended to limit illustrative embodiments of the present disclosure. As used herein, singular is also intended to include plural unless the context clearly points out singular or plural. In addition, it should be understood that terms "comprise" and/or "include" used in the description indicate the presence of features, steps, operations, devices, assemblies and/or their combinations.

The above examples are merely the preferred examples of the present disclosure and are not intended to limit the present disclosure. For a person skilled in the art, various modifications and changes may be made for the present disclosure. Any modifications, equivalent substitutions, improvements, etc. made within the spirit and principles of the present disclosure are intended to fall within the scope of protection of the present disclosure.

**Industrial applicability**

According to the electronic expansion valve provided in the examples of the present disclosure, by providing the accommodating cavity, the magnetic rotor moves in the height direction of the accommodating cavity. Moreover, the magnetic rotor rotates in the accommodating cavity. Through an arrangement of the accommodating cavity, interference of other structural members in a movement of the magnetic rotor is reduced. Thus, the magnetic rotor stably works. By arranging the magnetoresistive sensor assembly, the magnetoresistive sensor assembly collects a magnetic field of the magnetic rotor in a moving process, and forms a moving magnetic field curve. By analyzing a relation among a plurality of moving magnetic field curves, a movement situation of the magnetic rotor is determined. Moreover, the magnetoresistive sensor is fixed on the control circuit board in a patching manner, and no additional fixing member is required. Thus, assembly of the electronic expansion valve is simpler, and mounting cost is reduced. Further, problems of complex process, low efficiency, and high mounting cost when an electronic expansion valve is assembled in the prior art are resolved.

**Claims**

1. An electronic expansion valve, comprising:

   a frame body (10), wherein the frame body (10) has a mounting cavity (30) and an accommodating cavity (20), and the mounting cavity (30) is located on a circumferential outer side of the accommodating cavity (20);
   a magnetic rotor (40), wherein the magnetic rotor (40) is movably arranged in the accommodating cavity (20) in a height direction of the accommodating cavity (20);
   a control circuit board (31), wherein the control circuit board (31) is arranged in the mounting cavity (30); and
   a magnetoresistive sensor assembly (50), wherein the magnetoresistive sensor assembly (50) is fixed on the control circuit board (31) and attached to the control circuit board (31), and a moving range of the magnetic rotor (40) falls within a sensing range of the magnetoresistive sensor assembly (50).

2. The electronic expansion valve according to claim 1, wherein the magnetoresistive sensor assembly (50) at least comprises two magnetoresistive sensors, the magnetoresistive sensors are patch-type sensors, and the patch-type sensors are fixed on the control circuit board (31) in a patching manner.

3. The electronic expansion valve according to claim 1, wherein an interval is provided between a bottom surface of the magnetoresistive sensor assembly (50) and a bottom wall of the mounting cavity (30).

4. The electronic expansion valve according to claim 3, wherein an interval distance between the bottom surface of the magnetoresistive sensor assembly (50) and the bottom wall of the mounting cavity (30) is 0.1 mm to 1.0 mm.

5. The electronic expansion valve according to claim 1 or 3, wherein an interval is provided between a side wall of the magnetoresistive sensor assembly (50) and a side wall of the mounting cavity (30).

6. The electronic expansion valve according to claim 1 or 3, wherein an interval distance between a side wall of the magnetoresistive sensor assembly (50) and a side wall of the mounting cavity (30) is 0.1 mm to 1.0 mm.

7. The electronic expansion valve according to claim 1, wherein a wall surface of the mounting cavity (30) comprises a first side wall (34) along the circumferential and a second side wall (35) along the circumferential, the second side wall (35) is located on the inner side of the first side wall (34), and the control circuit board (31) is arranged outside the second side wall (35) in a sleeving manner; and a tangent plane (36) is provided on the second side wall (35), an opening (37) adapted to the tangent plane (36) is provided on the control circuit board (31), and the magnetoresistive sensor assembly (50) on the control circuit board (31) is aligned with the tangent plane (36).

8. The electronic expansion valve according to claim 1, wherein the magnetoresistive sensor assembly (50) comprises a first magnetoresistive sensor (51) and a second magnetoresistive sensor (52), and the first magnetoresistive sensor (51) and the second magnetoresistive sensor (52) are arranged on the control circuit board (31) at an interval.

9. The electronic expansion valve according to claim 8, wherein a distance between a center of the first magnetoresistive sensor (51) and a center of the magnetic rotor (40) is equal to a distance between a center of the second magnetoresistive sensor (52) and the center of the magnetic rotor (40).

10. The electronic expansion valve according to claim 8, wherein in the height direction of the accommodating cavity (20), an included angle $\alpha$ is formed by a projection of a center of the first magnetoresistive sensor (51), a projection of a center of the second magnetoresistive sensor (52), and a projection of a center of the magnetic rotor (40), with the vertex at the center of the magnetic rotor (40), and a number n of magnetic pole pairs of the magnetic rotor (40) and the included angle $\alpha$ satisfy:

$$\alpha = m\frac{360°}{2n} + \beta,$$

wherein m is a positive integer, and $\beta$ is a positive number less than $\frac{360°}{2n}$ .

11. The electronic expansion valve according to claim 1, wherein the magnetic rotor (40) comprises a detecting rotor (41) and a driving rotor (42), and the detecting rotor (41) and the driving rotor (42) are of an integral structure.

12. The electronic expansion valve according to claim 11, wherein a connector (43) is fixed between the driving rotor (42) and the detecting rotor (41), and the driving rotor (42), the detecting rotor (41), and the connector (43) are in an H shape jointly.

13. The electronic expansion valve according to claim 1, wherein the magnetoresistive sensor assembly (50) comprises one magnetoresistive sensor, the magnetoresistive sensor is a patch-type sensor, and the patch-type sensor is fixed on the control circuit board (31) in a patching manner.

Fig. 1

Fig. 2

Fig. 3

Fig. 4

Fig. 5

Jammed and stuck signals

M

14

Jammed and rebounded signals

Fig. 6

## INTERNATIONAL SEARCH REPORT

| | International application No. |
|---|---|
| | **PCT/CN2024/093125** |

### A. CLASSIFICATION OF SUBJECT MATTER

F16K31/06(2006.01)i

According to International Patent Classification (IPC) or to both national classification and IPC

### B. FIELDS SEARCHED

Minimum documentation searched (classification system followed by classification symbols)

IPC: F16K

Documentation searched other than minimum documentation to the extent that such documents are included in the fields searched

Electronic data base consulted during the international search (name of data base and, where practicable, search terms used)

CNABS: CNTXT; CNKI; VEN; WOTXT; EPTXT; USTXT: 盾安, 三花, 磁, 阻, 传感器, 粘. 黏. 贴, 电路板, 线路板, 电控板, magnet+, reluct+, sens+, transducer, stick+, attach+, adhibit+, circuit, board

### C. DOCUMENTS CONSIDERED TO BE RELEVANT

| Category* | Citation of document, with indication, where appropriate, of the relevant passages | Relevant to claim No. |
|---|---|---|
| PX | CN 220185983 U (DUN'AN AUTOMOBILE THERMAL MANAGEMENT TECHNOLOGY CO., LTD.) 15 December 2023 (2023-12-15) description, paragraphs [0002]-[0080], and figures 1-6 | 1-13 |
| Y | CN 114458806 A (DUN'AN AUTOMOBILE THERMAL MANAGEMENT TECHNOLOGY CO., LTD.) 10 May 2022 (2022-05-10) description, paragraphs [0002]-[0089], and figures 1-8 | 1-13 |
| Y | CN 210109945 U (TAI'AN SHANHU INSTRUMENT TECHNOLOGY CO., LTD.) 21 February 2020 (2020-02-21) description, paragraphs [0002]-[0029], and figures 1-7 | 1-13 |
| Y | CN 107763284 A (HANGZHOU SANHUA RESEARCH INSTITUTE CO., LTD.) 06 March 2018 (2018-03-06) description, paragraphs [0002]-[0049], and figures 1-10 | 1-13 |
| A | US 2007181391 A1 (ST. CLAIR KENNETH A. et al.) 09 August 2007 (2007-08-09) entire document | 1-13 |

☐ Further documents are listed in the continuation of Box C.  ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **24 June 2024** | **03 July 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2024/093125** |

| Patent document cited in search report | | | Publication date (day/month/year) | Patent family member(s) | | | Publication date (day/month/year) |
| --- | --- | --- | --- | --- | --- | --- | --- |
| CN | 220185983 | U | 15 December 2023 | None | | | |
| CN | 114458806 | A | 10 May 2022 | None | | | |
| CN | 210109945 | U | 21 February 2020 | None | | | |
| CN | 107763284 | A | 06 March 2018 | None | | | |
| US | 2007181391 | A1 | 09 August 2007 | US | 8397883 | B2 | 19 March 2013 |

Form PCT/ISA/210 (patent family annex) (July 2022)

**EP 4 692 617 A1**

**Patent documents cited in the description**

- CN 202321199298